Europäisches Patentamt

European Patent Office

Office européen des brevets

(19)

(11) Veröffentlichungsnummer: **0 105 322**
**B1**

# EUROPÄISCHE PATENTSCHRIFT

(12)

(45) Veröffentlichungstag der Patentschrift:
29.01.86

(51) Int. Cl.⁴: **C 04 B 7/43**

(21) Anmeldenummer: 83901305.9

(22) Anmeldetag: 15.04.83

(86) Internationale Anmeldenummer:
**PCT/AT 83/00010**

(87) Internationale Veröffentlichungsnummer:
**WO 83/03601 (27.10.83** Gazette **83/25)**

(54) **VERFAHREN ZUR HERSTELLUNG VON ZEMENTKLINKER.**

(30) Priorität: 16.04.82 AT 1494/82

(43) Veröffentlichungstag der Anmeldung:
18.04.84 Patentblatt 84/16

(45) Bekanntmachung des Hinweises auf die Patenterteilung:
29.01.86 Patentblatt 86/5

(84) Benannte Vertragsstaaten:
BE CH DE FR GB LI NL

(56) Entgegenhaltungen:
DE - A - 2 512 045
DE - A - 3 012 167
FR - A - 2 318 835
FR - A - 2 399 985
FR - A - 2 422 610

Zement, Kalk, Gips Nr. 5 (1979), Seiten 211-221

Die Akte enthält technische Angaben, die nach dem Eingang der Anmeldung eingereicht wurden und die nicht in dieser Patentschrift enthalten sind.

(73) Patentinhaber: **VOEST-ALPINE Aktiengesellschaft, Muldenstrasse 5, A-4020 Linz (AT)**

(72) Erfinder: **KWECH, Ludwig, Gerngasse 17, A-2391 Kaltenleutgeben (AT)**

(74) Vertreter: **Collin, Hans, Dipl.-Ing. Dr. et al, Patentanwälte Dipl.-Ing. Dr. Hans Collin Dipl.-Ing. Erwin Buresch Dipl.-Ing. Dr. Helmut Wildhack Dipl.-Ing. Armin Häupl Mariahilfer Strasse 50, A-1070 Wien (AT)**

### Beschreibung

Die Erfindung betrifft ein Verfahren zur Herstellung von Zementklinker, bei welchem das Rohmaterial in einer Vorwärm-Zone erhitzt, in einer Kalzinier-Zone mit Zweitfeuerung zumindest teilweise entsäuert und danach einem Brennprozess unterworfen wird, wonach der erbrannte Klinker in einer Kühl-Zone gekühlt wird, wobei im Bereich der Einbringung des vorerhitzten Rohmaterials in den Brennprozess, vorzugsweise im Bereich des Einlaufes eines Brennofens, und bzw. oder im Bereich zwischen Brennofeneinlauf und Kalzinierzone, die durch einen Kalzinierofen und bzw. oder die unterste Stufe des Zyklon-Systems gebildet ist, ein erster Sekundärbrennstoff in Form brennbare Bestandteile enthaltender, vorzugsweise grob-, gegebenenfalls unzerkleinerter, insbesondere verzögert verbrennender Stoffe, vorzugsweise Abfallstoffe und bzw. oder herkömmlicher Brennstoffe, zugesetzt und unter Zuführung des aus der Verbrennung des Primärbrennstoffes im Brennprozess entstandenen Abgases einer unvollständigen Verbrennung und bzw. oder Pyrolyse unterworfen werden, und die dabei gebildeten Gase zusammen mit dem Abgas aus dem Brennprozess als Sekundär-Brenngas der Kalzinierzone, insbesondere dem Kalzinierofen, zugeführt und dort unter Zufuhr von Tertiärluft oder Sauerstoff, die vorgewärmt sein können, gegebenenfalls unter Zusatz eines zweiten üblichen Sekundär-Brennstoffs verbrannt werden.

Derartige Verfahren und Vorrichtungen zu ihrer Durchführung sind bekannt. So ist in der DE-A Nr. 2512045 die Vorkalzinierung eines kalkhaltigen Rohmaterials, insbesondere eines Zementrohmehls, vor dessen abschliessender Wärmebehandlung beschrieben. Dabei wird das Material vor seinem Eintritt in den Drehrohrofen durch Verbrennen eines Brenngases mit Verbrennungsluft in einem Kalzinator vorkalziniert. Das Brenngas wird dadurch erhalten, dass in das obere Ende des Ofens (das ist das Ende, an dem das vorkalzinierte, heisse Rohmaterial eintritt) ein fester oder flüssiger Brennstoff eingebracht und innig mit dem Rohmaterial vermischt wird. Als Beispiele werden fester, fein verteilter Brennstoff, wie Kohlenstaub, grob gemahlener oder pelletisierter Brennstoff genannt. Beim Kontakt mit dem heissen Rohmaterial setzt der Brennstoff brennbare Gase frei, die aber nicht verbrennen, da das Drehrohrofenabgas keinen Sauerstoff enthält, sondern mit dem Drehrohrofenabgas in den Kalzinator mitgeführt werden, wo sie sich beim Kontakt mit der dem Kalzinator ebenfalls zugeführten Verbrennungsluft entzünden. Als Verbrennungsluft wird vorzugsweise Abluft aus dem Klinkerkühler, der Frischluft beigemischt werden kann, dem Kalzinator zugeführt.

In ähnlicher Weise wird gemäss der DE-A Nr. 3012167 bei einem Verfahren und Einrichtung zur kontinuierlichen Herstellung von Zementklinker so vorgegangen, dass zwischen dem Drehrohrofen und dem Kalzinator eine Wärmeaufschlusszone angeordnet ist, in die ein brennbares Material eingebracht und durch die heissen Drehrohrofenabgase unter Abgabe eines Brenngases abgebaut wird. Dabei kann in die Wärmeaufschlusszone zusätzlich auch Abluft aus dem Klinkerkühler eingebracht werden, so dass dann der Brennstoff nicht nur pyrolysiert, sondern teilweise verbrannt wird, was seinen Abbau erleichtert. Das Brenngas wird anschliessend im Kalzinator nach Zusatz von Abluft aus dem Klinkerkühler gezündet und verbrennt zur Vorkalzinierung des Zementrohmehls.

Als brennbares Material werden dabei abgenutzte Gummireifen, Gummiabfälle, Ölabfälle, ölhaltige Schlämme, Asphaltabfälle, Pech- oder Teerabfälle, Ölschiefer, Ölsand, als Ausschuss abfallende organische Verbindungen, Kohle, Braunkohle, Torf und Faulschlamm vorgeschlagen.

Die direkte Einbringung von festen oder flüssigen Brennstoffen in den Kalzinator von Zementherstellungsanlagen ist in «Zement, Kalk, Gips» Nr. 5, S. 211 bis 221, 1979, beschrieben. Hauptsächlich wird dabei Brennöl in den Kalzinator eingedüst; auch Gummischnitzel können eingesetzt werden. Ebenfalls wird das Einbringen von Ersatzbrennstoffen im Bereich des Drehofeneinlaufs beschrieben. Dabei werden ballastreiche Brennstoffe und Abfallbrennstoffe, insbesondere Holzkohle, Braunkohle, Säureharze, Altreifen und Hausmüll erwähnt.

Verfahren zur Behandlung von feinkörnigen Stoffen mit heissen Gasen, insbesondere zum Brennen von Zementklinker, unter Verwendung von Sekundärbrennstoffen, wobei aber keine unvollständige Verbrennung bzw. Pyrolyse der Sekundärbrennstoffe unter Bildung eines Brenngases durchgeführt wird, sind in den FR-A Nrn. 2399985 und 2422610 beschrieben. Dort reagieren in der ersten Stufe des Brennprozesses schnell oxydierende, im wesentlichen feingemahlene Brennstoffanteile mit dem Feinanteil des Rohmehls, in der zweiten Stufe langsam oxydierende, im wesentlichen grobkörnige Brennstoffanteile mit dem Grobanteil des Rohmehls. In beiden Druckschriften ist angegeben, dass keine unvollständige Verbrennung stattfindet; so in der FR-A Nr. 2399985, dass die Vergasung und Oxydierung des grobkörnigen Brennstoffanteils im Ofen nicht unter Sauerstoffmangel erfolgen darf und in der FR-A Nr. 2422610, dass der Brennstoff im Ofen vollständig ausbrennt und die Ofenabgase sauerstoffhältig sind.

Die FR-A Nr. 2318835 betrifft ein Verfahren zur Entstickung, d.h. zur Verhinderung der $NO_x$-Emission, insbesondere beim Brennen von Zementklinker. Es ist nicht Ziel dieses Verfahrens, einen zweistufigen Brennprozess für das Rohmehl durchzuführen, sondern die am Ofenausgang im Ofenabgas vorhandenen Stickoxide zu reduzieren, wozu dort ein Reduktionsmittel zugegeben wird. Als Reduktionsmittel werden vor allem Ammoniak, Eisenpulver und Eisenoxidpulver, aber auch Brennstoffe wie Kohle, Kohlenmonoxid und Kohlenwasserstoffe genannt. An eine unvollständige Verbrennung dieser Reduktionsmittel unter Bildung eines Brenngases, das in die Kalzinierzone transportiert und dort durch Sauerstoffzumischung verbrannt werden soll, ist nicht gedacht. An keiner Stelle der FR-A Nr. 2318835 ist davon die Rede, dass unvollständig oder zu CO verbrannt werden soll. Dem würde auch glatt widersprechen, dass CO als solches als Reduktionsmittel vorgeschlagen wird. Lediglich für den Fall, dass nach der Reduktionszone für die Stickoxide noch brennbare Reduktionsmittel vorhanden wären, werden diese durch anschliessend zugeführte Verbrennungsluft verbrannt. Dies ist offensichtlich nicht der Regel-, sondern der Ausnahmefall, wenn nämlich – da das Ziel die Umwandlung der Stickoxide ist – für diesen Zweck zuviel Reduktionsmittel zugegeben worden war. Dabei kann die Verbrennungsluft sowohl unmittelbar anschliessend an die Reduktionszone als auch im ersten Zyklon zugesetzt werden; gemäss der FR-A Nr. 2318835 wird also kein Unterschied gemacht, ob das gegebenenfalls noch vorhandene Reduktionsmittel vor oder in der Kalzinierzone verbrannt wird.

Die vorgeschlagenen Verfahren, bei denen Sekundärbrennstoff in ein Sekundärbrenngas umgewandelt und dieses anschliessend gesondert verbrannt wird, haben, offensichtlich infolge von Schwierigkeiten in der Verfahrensführung, in die Praxis keinen Eingang gefunden.

In der Praxis der Zementklinkerherstellung haben lediglich zwei Varianten des Einsatzes von Sekundärbrennstoff grössere Anwendung gefunden.

Bei der ersten Variante werden bei in herkömmlicher Bauweise errichteten Wärmetauscheröfen Sekundärbrennstoffe in den Temperaturbereich zwischen etwa 650° und 1000° C, d.h. in der Regel in den Bereich zwischen Ofeneinlauf und unterster Zyklonstufe des Wärmetauschers eingeführt. Üblicherweise gelingt dies ohne hohe Investitionen. Als Sekundärbrennstoffe werden eingesetzt Heizöl schwer, Gas, Kohlenstaub, aber auch Abfallstoffe mit konstantem Heizwert, etwa Altreifen. Die gasförmigen, flüssigen oder feinkörnigen Brennstoffe werden in Vermischung mit dem vom Wärmetauscher kommenden Rohmehl verbrannt, die grobkörnigen Stoffe, wie etwa die Altreifen, verbrennen in der Einlaufvorrichtung zum Ofen bzw. können sie auch in den Ofen getragen werden, in dem sie dann verbrennen. Die einsetzbare Menge an Sekundärbrennstoff ist in beiden Fällen begrenzt. In der Regel gelingt es nicht, mehr als 20 bis 25% des Gesamtenergiebedarfes auf diesem Weg durch Sekundärbrennstoffe zu decken. Wird dieser Wert überschritten, so steigt der CO-Gehalt im Ofenabgas stark an, die Abgastemperatur nimmt zu und der Gesamtenergiebedarf steigt. Der Kalzinationsgrad kann durch den Einsatz von Sekundärbrennstoffen auf diesem Weg nicht wesentlich gesteigert werden. Es ist daher notwendig, die zur Restentsäuerung im Ofen benötigte Energiemenge über den Primärbrenner des Ofens zuzuführen. Bei einem zu hohen Anteil an Sekundärbrennstoffen gelingt dies erfahrungsgemäss nicht mehr.

Der Einsatz von grobkörnigen Stoffen, z.B. Altreifen hat sich grundsätzlich bewährt, wenn sie in den Ofen selbst gelangen, wo eine ausreichende Entgasungs- und Brennzeit zur Verfügung steht. Naturgemäss ist es in diesem Fall aber nicht möglich, Tertiärluft einzusetzen, sondern die gesamte, für die Verbrennung dieser Sekundärbrennstoffe benötigte Luft muss durch den Ofen zugeführt werden. Dadurch bedingt ergeben sich wesentlich höhere Gasgeschwindigkeiten und damit ein erhöhter Staubkreislauf. Das bedeutet, dass bereits entsäuertes heisses Rohmehl aus dem Ofen in den Wärmetauscher getragen wird. Die Wärme wird, wie dies verschiedentlich ausgedrückt wurde, aus dem Ofen in den Wärmetauscher verschleppt. Verstärkte Ansatzbildungen im Wärmetauscher sowie eine entsprechende Erhöhung des Gesamtenergiebedarfes sind die Folge.

Die zweite Variante, die praktisch nur in Neuanlagen zum Einsatz kommt, sieht vor, die Verbrennung der Sekundärbrennstoffe in einer eigenen Brennkammer vorzunehmen, die häufig als Kalzinator bezeichnet wird. Es wurde eine Reihe von Vorschlägen für solche Kalzinatoren gemacht. Sie zeichnen sich alle durch eine verlängerte Verweilzeit des Rohmehls aus sowie durch hohe Investitionen und einen durch den Druckabfall im Kalzinator bedingten höheren Aufwand an elektrischer Energie. Als Sekundärbrennstoffe kommen praktisch nur hochwertige Brennstoffe in Frage; die zu ihrer Verbrennung benötigte Luft wird häufig zur Entlastung der Sinterzone nicht durch den Ofen geleitet, sondern dem Kalzinator in einer eigenen Leitung, vorzugsweise als Kühlerheissluft zugeführt. Mit geeigneten Kalzinatoren kann ein Kalzinationsgrad von über 80 bis etwa 95% erreicht werden. Schwierigkeiten gibt es häufig, indem nicht nur das Rohmehl entsäuert wird, sondern auch Schmelzen auftreten und sich Ansätze bilden, welche die Gasgeschwindigkeiten verändern und den Transport des entsäuerten Rohmehls in den Ofen beeinträchtigen.

Es bestand die Aufgabe, die Nachteile der praktisch verwendeten Verfahren, bei denen Sekundärbrennstoffe eingesetzt werden, durch den Einsatz eines Sekundärbrennstoffvergasungsverfahrens zu vermeiden, wobei aber dieses bereits vorgeschlagene Verfahren so geführt werden soll, dass eine praktische Anwendung möglich und sinnvoll ist.

Somit bestand die Aufgabe, das eingangs genannte Verfahren hinsichtlich der Verfahrensführung zu optimieren sowie hinsichtlich der anzustrebenden Unempfindlichkeit gegenüber den verschiedenartigen Sekundärbrennstoffen.

Das erfindungsgemässe Verfahren ist dadurch gekennzeichnet, dass der CO-Gehalt des Sekundär-Brenngases auf über 3 Vol.-%, vorzugsweise über 7 Vol.-%, insbesondere über 15 Vol.-%, eingestellt wird.

Nach einem weiteren Kennzeichen der Erfindung wird vorteilhaft der $CO_2$-Gehalt des Sekundär-Brenngases auf einen Wert eingestellt, der weniger als 8 Vol.-%, vorzugsweise weniger als 4 Vol.-%, insbesondere weniger als 2 Vol.-%, über dem $CO_2$-Gehalt des bei der Verbrennung des Primärbrennstoffes im Brennprozess entstandenen Abgases liegt.

Insbesondere wird beim erfindungsgemässen Verfahren ein erster Sekundärbrennstoff mit bis zu 15 Gew.-%, vorzugsweise bis zu 8 Gew.-%, weiter bevorzugt bis zu 5 Gew.-%, Wassergehalt eingesetzt, der unter den gewählten Betriebsbedingungen vorzugsweise innerhalb von mehr als 20 s verbrennt bzw. vergast.

Bezüglich der ersten Sekundärbrennstoffe werden solche angestrebt, die bei den herrschenden Betriebsbedingungen eine längere Verbrennungszeit als 20 s aufweisen, zum Unterschied von Gasen oder Brennölen, die praktisch augenblicklich verbrennen. Als Verbrennungszeit ist die Zeitdauer zwischen Brennbeginn bzw. Vergasungsbeginn und Verbrauch der Brennsubstanz zu verstehen. Dies ist bei festen Brennstoffen eine klare Funktion der Zusammensetzung und des Volumens = Korngrösse, die je nach den Betriebsbedingungen (Temperatur und Verweilzeit) abzustimmen ist. Bei einer Aufgabe am Einlauf des Brennofens kann in Abhängigkeit von der Verweilzeit von etwa 20 min vorteilhaft ein entsprechend lang brennender Sekundärbrennstoff, ansonsten können kürzer brennende Stoffe eingesetzt werden. Angestrebt wird – abgestimmt auf die Verweilzeit – eine möglichst lange Brenndauer.

Überraschenderweise hat sich auch gezeigt, dass bei der erfindungsgemässen Einstellung des CO- und/oder $CO_2$-Gehalts der Sekundärbrenngase das Verfahren im wesentlichen unabhängig von der Qualität des Sekundärbrennstoffs wird, so dass dafür auch sehr minderwertige, grob- gegebenenfalls sogar unzerkleinerte, und/oder nur verzögert verbrennende Stoffe einsetzbar sind, die bisher wegen zu geringen Wärmeinhalts nicht für eine Verwertung beim Zementbrennprozess herangezogen werden konnten. Es ist sogar möglich, Abfallstoffe mit relativ hohen Wassergehalten einzusetzen, wobei insbesondere Wassergehalte bis zu 15 Gew.-% günstig sind, ohne den Wärmehaushalt zu belasten. Das Wasser wird dabei in einer endothermen Reaktion (Wassergasreaktion) mit der Bruttogleichung $H_2O + C + 131,6$ kJ (J 1,4 kcal) $\rightarrow CO + H_2$ hauptsächlich in $CO$ und $H_2$ umgewandelt.

Wie schon erwähnt ist es im Sinne einer stabilen Ofenfahrweise günstig, langbrennende erste Sekundärbrennstoffe einzusetzen, dies insbesondere beim Einbringen des Sekundärbrennstoffs im Bereich des Brennofeneinlaufs, weil dort genügend Zeit zum Aufschluss zur Verfügung steht, und so ein sehr gleichmässiges Sekundärbrenngasangebot erzielbar ist, bzw. auch bei stark in der Zusammensetzung schwankenden Sekundärbrennstoffen genügend Zeit zur Einstellung der CO- und/oder $CO_2$-Werte vorhanden ist.

Das der Kalzinierzone zugeführte Sekundärbrenngas besteht einerseits aus bei der Verbrennung des Primärbrennstoffes im Brennprozess entstehendem Abgas und anderseits aus den Gasen, die bei der unvollständigen Verbrennung und bzw. oder Pyrolyse der Sekundärbrennstoffe, also bei deren Verbrennung bzw. Erhitzung bei Luftunterschuss freigesetzt werden, und besteht überwiegend aus

a) Kohlenmonoxid CO (aus der Verbrennung des Kohlenstoffs der Sekundärbrennstoffe bei Luftunterschuss bzw. aus der Reaktion des in den Sekundärbrennstoffen enthaltenen Wassers mit Kohlenstoff

b) Wasserstoff $H_2$ (aus der Reaktion des in den Sekundärbrennstoffen enthaltenen Wassers mit Kohlenstoff)

c) durch pyrolytische Zersetzung aus den Sekundärbrennstoffen entstandenen Gasen, z.B. Kohlenwasserstoffen sowie

d) gegebenenfalls durch Zersetzung der Sekundärbrennstoffe entstandenen weiteren flüchtigen Verbindungen, z.B. Schwefelverbindungen.

Die Zusammensetzung des Sekundärbrenngases kann naturgemäss in weiten Grenzen schwanken, je nach Art und Menge der eingesetzten Sekundärbrennstoffe. Wesentlich ist die Einstellung seines CO- und/oder $CO_2$-Gehalts.

Der Kalzinierzone kann ausser dem Sekundärbrenngas noch zusätzlich in bekannter Weise ein herkömmlicher schnellverbrennender zweiter Sekundärbrennstoff dosiert zugeführt werden. Dies ist insbesondere dann von Interesse und günstig, wenn beim erfindungsgemässen Verfahren Stoffe mit sehr stark variierenden Anteilen an brennbaren Bestandteilen oder mit sehr stark variierenden Anteilen an brennbaren Bestandteilen oder mit sehr stark variierender Verbrennungs- bzw. Pyrolysegeschwindigkeit eingesetzt werden, um Schwankungen in der Menge und bzw. oder im Heizwert des entstehenden Sekundärbrenngases zu vermeiden.

Mittels einer Einrichtung zur laufenden Bestimmung der Menge und des Heizwertes des Sekundärbrenngases und/oder der Zusammensetzung des die Kalzinierzone verlassenden Abgases kann die Zufuhr des zusätzlichen zweiten Sekundärbrennstoffes, wie z.B eines Heizgases oder Öls, in die Kalzinierzone erfindungsgemäss so gesteuert werden, dass der Kalzinierzone letztlich eine Menge des Gemisches von Sekundärbrenngas und herkömmlichem zweiten Sekundärbrennstoff zugeführt wird, dessen Gesamt-Heizleistung im wesentlichen konstant ist, wenn auch der zur Erzeugung des Sekundärbrenngases erfindungsgemäss eingesetzte erste Sekundärbrennstoff sehr hohe Qualitäts- und Verbrennungseigenschafts-Schwankungen aufweist.

Bevorzugt ist es, das Sekundärbrenngas in der Kalzinierzone mit in bekannter Weise, vorzugsweise in der Kühlzone, beispielsweise im Klinkerkühler, vorerwärmter Tertiärluft und/oder mit gegebenenfalls vorgewärmtem Sauerstoff zu verbrennen.

Es hat sich gezeigt, dass im erfindungsgemäss erhaltenen Klinker, der den Kühler verlässt, trotz der «reduzierenden» Verhältnisse keine reduzierten Bestandteile festzustellen sind. Das bedeutet, dass gegebenenfalls im Bereich des Ofeneinlaufes reduzierte Klinkerbestandteile, wie z.B. zweiwertiges oder metallisches Eisen, Sulfide und dergleichen, im oxidierenden Teil des Ofens, insbesondere in der Sinterzone mit hoher Sicherheit rückoxidiert werden. In diesem Sinn konnte auch kein Unterschied im Erstarrungsverhalten und in der Festigkeitsentwicklung zwischen einem nach dem erfindungsgemässen Verfahren und einem nach herkömmlichem Verfahren hergestellten Klinker beobachtet werden.

Die erfindungsgemässe Verfahrensführung macht es auch möglich, entweder bei gleichen Strömungsverhältnissen im Ofen und gleicher Dimensionierung die Ofenleistung zu steigern oder bei gleicher Leistung und Ofendimensionierung die Strömungsverhältnisse wesentlich zu verbessern, also die Gasgeschwindigkeit im Ofen zu vermindern, oder bei gleicher Leistung und gleichen Strömungsverhältnissen den Durchmesser des Ofens wesentlich zu reduzieren, was letztlich geringere Investitionen und wesentlich bessere Haltbarkeit der Ofenausmauerung bedeutet.

Als Sekundärbrennstoffe können Abfallprodukte aller Art eingesetzt werden. Es seien beispielsweise erwähnt: Kunststoffabfälle, insbesondere Polyäthylen, Polyvinylazetat, Polyamid, Polyvinylchlorid u.dgl., im besonderen Schnüre, Strümpfe, Trikotagenreste u.ä. schwer zu zerkleinernde Kunststoffabfälle, natürliche oder künstliche Gummiprodukte, insbesondere Altreifen, Kautschuk, Müll, insbesondere Hausmüll und/oder Sperrgut, Schlachthofabfälle, Fette, Tierkadaver, Abfallsäuren, Textilien, Papier, Holz, Stroh, Sulfitablaugen, phenolhältige Abfallprodukte, ölhaltige Abfallprodukte aus den Abwasserreinigunsanlagen der Raffinerien oder petrochemischen Betrieben, sowie Bodensätze aus Öltanks, Ölabscheidern, ölhältige Schleifschlämme, Schwimmschlamm aus Kläranlagen, Ölemulsionen, Abfälle aus Benzinabscheidern, Altöle, Abfall-Lösemittel, Lackrückstände, mit Öl, Lacken oder ähnlichen organischen Produkten durchtränkte poröse Gesteine, insbesondere Perlit oder Branntkalk, beispielsweise aus Tankerunfällen, Raffinierschlamm, Druckerschwärze, Faulschlamm, Frischschlamm, Vorklärschlamm und/oder Überschussschlamm bzw. Mischungen aus diesen Stoffen, gegebenenfalls in Mischung mit herkömmlichen Brennstoffen.

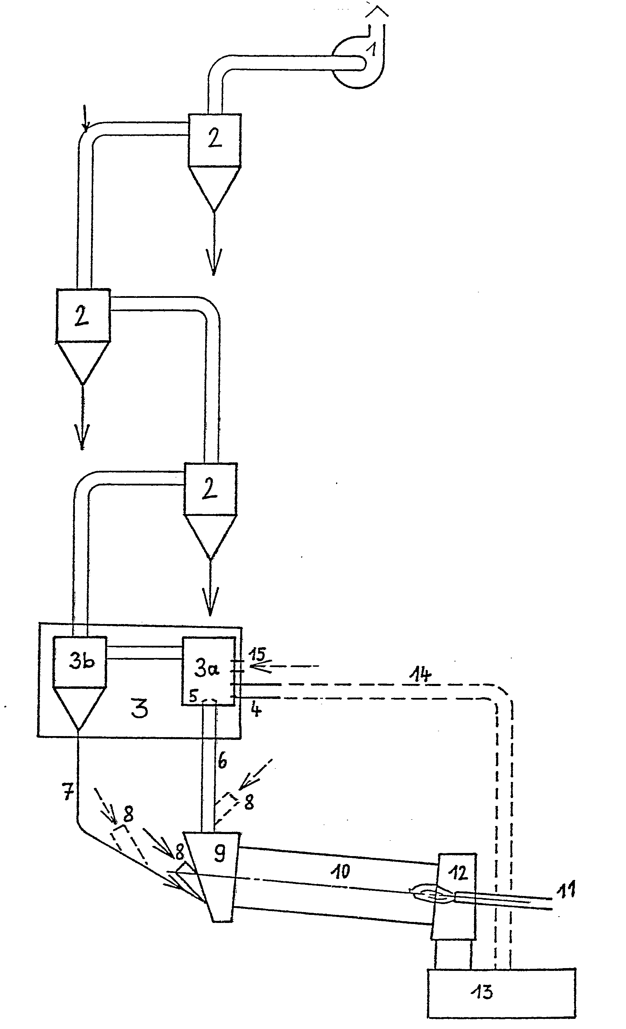

Im folgenden wird das erfindungsgemässe Verfahren an Hand der Zeichnung näher beschrieben, die schematisch eine Anlage zur Herstellung von Zementklinker zeigt. Über ein mit einem Absauggebläse 1 ausgestattetes, gegebenenfalls mehrsträngiges System von Zyklon-Wärmetauschern 2 gelangt das zu brennende Zementrohmehl in eine Kalzinierzone 3, die einen Kalzinator 3a zur Kalzinierung des Zementrohmehls und einen Abscheider 3b umfasst. Von der Kalzinierzone aus wird das vorkalzinierte Zementrohmehl durch die Zuführungs-Leitung 7 dem Einlauf 9 des Brennofens 10, der in der Zeichnung als Drehofen dargestellt ist, zugeführt.

Das vorkalzinierte Zementrohmehl durchläuft den mit dem mit Primärbrennstoff und Primärluft beschickten Brenner 11 ausgerüsteten Brennofen 10 und verlässt den Ofen anschliessend an dessen Sinterzone am Ofenkopf 12 als Klinker, der dann im Klinkerkühler 13 abgekühlt wird, wonach dessen Aufarbeitung durch Mahlung, Sichtung u.dgl. erfolgt.

Die beim Verbrennen des Primärbrennstoffes im Brenner 11 des Brennofens 10 entstehenden Ofen-Abgase werden über die Abgasabführungs-Leitung 6 dem Kalzinator 3a oder einer untersten als Kalzinator ausgebildeten Zyklon-Stufe zugeführt.

An der Leitung 6, an der Leitung 7 und/oder direkt am Einlauf 9 des Brennofens 10 ist eine Beschickungseinrichtung 8, insbesondere eine dort einmündende Schleuse, zum Einbringen des Sekundärbrennstoffes angeordnet. Dieser Brennstoff, beispielsweise grob zerkleinerter Abfall, gelangt in den Bereich des Einlaufs 9 des Brennofens 10 und wird dort von den heissen Ofenabgasen, in welchen hinsichtlich der Menge brennbarer Substanzen im Sekundärbrennstoff ein Unterschuss an Luft bzw. Sauerstoff eingestellt ist, erhitzt, zersetzt sich und verbrennt nur unvollständig und/oder pyrolysiert.

Die dabei freigesetzten Gase, z.B. CO, Kohlenwasserstoff-Crackgase, $CH_4$, $H_2$, die das Sekundärbrenngas bilden, werden zusammen mit den Brennofen 10 verlassenden Abgas durch die Abgasabführungs-Leitung 6 dem Kalzinator 3a zugeführt und werden dort unter gesonderter Zuführung von Tertiärluft über die Zuführungsstelle 4 verbrannt. Die dabei freigesetzte Wärme dient zur Entsäuerung des Rohmaterials.

Die zur Verbrennung des Sekundärbrenngases notwendige Tertiärluft kann vorteilhaft über die durch den Klinkerkühler geführte Leitung 14 dem Kalzinator 3a zugeführt werden.

Über die Zuführung 15 im Kalzinator 3a kann, was besonders zum Ausgleich von besonderen Mengen- und Heizwert-Schwankungen des Sekundärbrenngases vorteilhaft ist, zusätzlich ein herkömmlicher Sekundärbrennstoff in die Kalzinierzone 3 eingebracht werden.

Die Beschickungseinrichtung 8, insbesondere Schleuse, für den Sekundärbrennstoff kann gegebenenfalls auch so angeordnet sein, dass der Sekundärbrennstoff in den Pyrolysebereich eines in einen Pyrolysebereich und einen davon getrennten Kalzinierbereich geteilten Kalzinators 3a eingebracht wird.

In der Abgasabführungs-Leitung 6, durch die das Sekundärbrenngas dem Kalzinator 3a zugeführt wird, befindet sich ein Analysengerät 5 zur Erfassung des CO- und/oder $CO_2$-Gehalts des Sekundärbrenngases.

## Patentansprüche

1. Verfahren zur Herstellung von Zementklinker, bei welchem das Rohmaterial in einer Vorwärm-Zone erhitzt, in einer Kalzinierzone mit Zweitfeuerung zumindest teilweise entsäuert und danach einem Brennprozess unterworfen wird, wonach der erbrannte Klinker in einer Kühlzone gekühlt wird, wobei im Bereich der Einbringung des vorerhitzten Rohmaterials in den Brennprozess, vorzugsweise im Bereich des Einlaufens eines Brennofens, und bzw. oder im Bereich zwischen Brennofeneinlauf und Kalzinierzone, die durch einen Kalzinierofen und bzw. oder die unterste Stufe des Zyklon-Systems gebildet ist, ein erster Sekundärbrennstoff in Form brennbare Bestandteile enthaltender, vorzugsweise grob-, gegebenenfalls unzerkleinerter, insbesondere verzögert verbrennender Stoffe, vorzugsweise Abfallstoffe und bzw. oder herkömmlicher Brennstoffe, zugesetzt und unter Zuführung des aus der Verbrennung des Primärstoffes im Brennprozess entstandenen Abgases einer unvollständigen Verbrennung und bzw. oder Pyrolyse unterworfen werden, und die dabei gebildeten Gase zusammen mit dem Abgas aus dem Brennprozess als Sekundärbrenngas der Kalzinierzone, insbesondere dem Kalzinierofen, zugeführt und dort unter Zufuhr von Tertiärluft oder Sauerstoff, die vorgewärmt sein können, gegebenenfalls unter Zusatz eines zweiten üblichen Sekundärbrennstoffs verbrannt werden, dadurch gekennzeichnet, dass der CO-Gehalt des Sekundärbrenngases auf über 3 Vol.-%, vorzugsweise über 7 Vol.-%, insbesondere über 15 Vol.-%, eingestellt wird.

2. Verfahren nach Anspruch 1, dadurch gekennzeichnet, dass der $CO_2$-Gehalt des Sekundärbrenngases auf einen Wert eingestellt wird, der weniger als 8 Vol.-%, vorzugsweise weniger als 4 Vol.-%, insbesondere weniger als 2 Vol.-%, über dem $CO_2$-Gehalt des bei der Verbrennung des Primärbrennstoffes im Brennprozess entstandenen Abgases liegt.

3. Verfahren nach Anspruch 1 oder 2, dadurch gekennzeichnet, dass ein erster Sekundärbrennstoff mit bis zu 15 Gew.-%, vorzugsweise bis zu 8 Gew.-%, insbesondere bis zu 5 Gew.-%, Wassergehalt eingesetzt wird.

4. Verfahren nach einem der Ansprüche 1 bis 3, dadurch gekennzeichnet, dass ein erster Sekundärbrennstoff eingesetzt wird, der innerhalb von mehr als 20 s, vorzugsweise mehr als 2 min, insbesondere mehr als 10 min, verbrennt.

5. Verfahren nach einem der Ansprüche 1 bis 4, dadurch gekennzeichnet, dass die Gesamtheizleistung durch dosierte Verbrennung des zweiten Sekundärbrennstoffs gesteuert, insbesondere konstant gehalten wird.

## Claims

1. A process for the production of cement clinker in which the raw material is heated in a preheating zone, is at least partially deacidified in a calcining zone with secondary firing and then subjected to a burning process, whereupon the burned clinker is cooled in a cooling zone, a first secondary fuel in the form of preferably coarsely divided, optionally undivided, in particular delayed burning substances, preferably waste matter and/or conventional fuels, containing combustible components, is added in the zone of introduction of the preheated raw material into the burning process, preferably in the zone of the inlet of a burning kiln, and/or in the zone between burning kiln inlet und calcining zone which is formed by a calcining furnace and/or the lowest stage of the cyclone system, which secondary fuel is then subjected to incomplete combustion and/or pyrolysis under addition of the waste gas formed in the combustion of the primary fuel in the burning process, and the gases thus formed together with the waste gas from the burning process are fed as secondary fuel gas to the calcining zone, in particular to the calcining furnace and are burned there under addition of tertiary air or oxygen which are optionally preheated, optionally under addition of a second conventional secondary fuel, characterized in that the CO-content of the secondary fuel is adjusted to more than 3 percent by volume, preferably to more than 7 percent by volume, in particular to more than 15 percent by volume.

2. The process according to Claim 1, wherein the $CO_2$-content of the secondary fuel gas is adjusted to a value which is less than 8 percent by volume, preferably less than 4 percent by volume, in particular less than 2 percent by volume above the $CO_2$-content of the waste gas formed in the combustion of the primary fuel in the burning process.

3. The process according to Claim 1 or 2, wherein a first secondary fuel with a water content of up to 15 percent by weight, preferably up to 8 percent by weight, in particular up to 5 percent by weight, is used.

4. The process according to any one of the Claims 1 to 3, wherein a first secondary fuel burning within more than 20 seconds, preferably more than two minutes, in particular more than 10 minutes, is used.

5. The process according to any one of the Claims 1 to 4, wherein the total heating capacity is controlled, in particular kept constant, by metered combustion of the second secondary fuel.

## Revendications

1. Procédé de fabrication de clinker dans lequel la matière première est chauffée dans une zone de réchauffage, est au moins partiellement désacidifiée dans une zone de calcinage avec feu secondaire et puis est soumise à un processus de combustion, le clinker cuit étant refroidi après dans une zone de refroidissement, un premier combustible secondaire sous forme de substances concassées, le cas échéant non broyées, en particulier de combustion retardée, de préférence de déchets et/ou de combustibles tradionnels, contenant de composants combustibles, étant ajouté dans la zone d'introduction de la matière première préchauffée dans le processus de combustion, de préférence dans la zone de l'orifice d'admission d'un four de cuisson et/ou dans la zone entre l'orifice d'admission du four de cuisson et la zone de calcinage formée par un four de calcinage et/ou l'étage le plus inférieur du système de cyclone, le combustible secondaire étant soumis à la combustion incomplète et/ou la pyrolyse sous addition du gaz perdu formé au cours de la combustion du combustible primaire dans le processus de combustion, et les gaz tellement formés, ensemble avec le gaz perdu du processus de combustion, étant introduits comme combustible secondaire dans la zone de calcinage, en particulier dans le four de calcinage, et là sont brûlés sous addition d'air tertiaire ou d'oxygène, le cas échéant préchauffés, le cas échéant sous addition d'un deuxième combustible traditionnel, caractérisé en ce que la teneur en CO du combustible secondaire est ajustée à plus de 3% en volume, de préférence à plus de 7% en volume, en particulier à plus de 15% en volume.

2. Procédé selon la revendication 1, caractérisé en ce que la teneur en $CO_2$ du gaz de combustion secondaire est ajustée à une valeur de moins de 8% en volume, de préférence de moins de 4% en volume, en particulier de moins de 2% en volume supérieur à la teneur en $CO_2$ du gaz perdu formé au cours de la combustion du combustible primaire dans le processus de cuisson.

3. Procédé selon la revendication 1 ou 2, caractérisé en ce qu'un premier combustible secondaire avec une teneur en eau de jusqu'à 15% en poids, de préférence jusqu'à 8% en poids, en particulier jusqu'à 5% en poids, est utilisé.

4. Procédé selon une des revendications 1 à 3, caractérisé en ce qu'un premier combustible secondaire brûlant en plus de 20 secondes, de préférence plus de deux minutes, en particulier plus de 10 minutes, est utilisé.

5. Procédé selon une des revendicaitons 1 à 4, caractérisé en ce que la totalité de la puissance calorifique est contrôlée, en particlier maintenue constante, par la combustion dosée du deuxième combustible secondaire.